Europäisches Patentamt

European Patent Office

Office européen des brevets

(19)

(11) Veröffentlichungsnummer : **0 095 013**
B1

(12) **EUROPÄISCHE PATENTSCHRIFT**

(45) Veröffentlichungstag der Patentschrift :
06.05.87

(21) Anmeldenummer : 83101611.8

(22) Anmeldetag : 19.02.83

(51) Int. Cl.⁴ : **G 01 F   1/704,** G 01 F   1/68

(54) Sender- bzw. Empfängerelement für eine nach dem Wärmeimpfverfahren arbeitende Durchfluss-Messvorrichtung und unter Verwendung dieser Elemente gebaute Vorrichtung.

(30) Priorität : 06.03.82 DE 3208145

(43) Veröffentlichungstag der Anmeldung :
30.11.83 Patentblatt 83/48

(45) Bekanntmachung des Hinweises auf die Patenterteilung : 06.05.87 Patentblatt 87/19

(84) Benannte Vertragsstaaten :
CH FR GB LI NL SE

(56) Entgegenhaltungen :
EP-A- 0 008 185
EP-A- 0 023 457
FR-A- 2 439 387
US-A- 4 074 566
US-A- 4 286 377
US-A- 4 304 129

(73) Patentinhaber : VISCOTHERM AG
Im Ufgänt 10
CH-8128 Hinteregg (CH)

(72) Erfinder : Horn, Klaus, Prof. Dr.-Ing.
Sanddornweg 10a
D-3300 Braunschweig (DE)

(74) Vertreter : Riecke, Manfred
Neuköllner Strasse 8
D-6333 Braunfels (DE)

## Beschreibung

Die Erfindung betrifft ein Sender- bzw. Empfängerelement für eine nach dem Wärmeimpfverfahren arbeitende Durchfluß-Meßvorrichtung, ein Verfahren zu dessen Herstellung sowie eine unter Verwendung dieser Elemente gebaute Meßvorrichtung.

Vorrichtungen zur Messung des Volumendurchflusses strömender Medien, die nach den verschiedensten Verfahren arbeiten, sind in vielen Ausführungsformen bereits bekannt. Zu den bekannten Verfahren zählen auch die Impfverfahren, bei denen von einem Senderelement dem strömenden Medium entweder kleinste Störpartikel (Staub-Tröpfchen-Dampf-Gas-Reflektor-Partikel usw.) aufgeladen oder sehr eng begrenzten Teilvolumina impulsförmig Änderungen physikalischer Eigenschaften (Temperatur, Viskosität, Dielektrizitäts-Permeabilitäts-Konstante, Brechungsindex, Farbe, Trübung etc.) aufgeimpft werden. Diese « Impfkorpuskeln » werden von der Strömung mitgerissen und stromabwärts im Augenblick des Passierens eines Meßquerschnittes von einem oder mehreren gegeneinander versetzten Empfängerelementen detektiert.

Ein Impfverfahren der eingangs genannten Art, bzw. eine Vorrichtung dazu ist z. B. beschrieben in der EP-A-0 023 457, in der mit einem Sender- und einem Empfängerelement gearbeitet wird und die jeweiligen Elektrodenzuführungen elektrisch voneinander isoliert sind. Ferner ist in der FR-A-2 439 387 ein Sender- bzw. Empfängerelement gezeigt, das mit elektrisch voneinander isolierten Haltebändern im Strömungskanal gehalten wird. Zudem ist in der EP-A-0 008 185 die Ausrichtung der Widerstandsstrecke derartiger Elemente in eine zur Strömungsrichtung des Mediums parallele Lage gezeigt.

Die Strömungsgeschwindigkeit $q_v$ längs einer Strombahn ist dabei umgekehrt proportional zu der Zeit $T_v$, die ein Impfkorpuskel benötigt, um die Strombahnstrecke $s_m$ zwischen Sender und Empfänger bzw. zwischen zwei benachbarten Empfängern zu passieren. Bei bekannten Strömungsquerschnitt A und bekannten Stromungsprofil (Korrekturfaktor k) kann dann der Volumendurchfluß $Q_v$ nach vielfältigen Auswerteverfahren aus der Beziehung

$$Q_v = k \cdot A \cdot q_v = k \cdot A \cdot (s_m/T_v) = K \cdot 1/T_v$$

bestimmt werden.

Gegenüber den anderen bekannten Durchfluß-Meßverfahren haben die Impfverfahren wesentliche Vorteile. Vor allem arbeiten sie ohne bewegliche Teile und daher abnutzungsfrei. Ferner liefern sie linear abhängige Ausgangssignale und können bei Gasen und Flüssigkeiten (leitend und nichtleitend) eingesetzt werden.

Insbesondere das Wärmeimpfverfahren zeichnet sich dadurch aus, daß es vielgestaltig variabel und an die unterschiedlichsten Meßmedien und Meßbereiche anpaßbar ist.

Trotz der genannten Vorteile haben alle Ausführungsvarianten der Impfverfahren in der Praxis noch keinen breiteren Eingang finden können. Dafür sind zwei wesentliche Gründe maßgebend :

1. Die Verfahren arbeiten mit ungenügender Genauigkeit, weil es nicht gelang, die Impfkorpuskeln gleichzeitig genügend kleinvolumig und in ihrem strömungsphysikalischen Verhalten mit dem Meßmedium übereinstimmend zu gestalten. Dies gilt insbesondere für die Verfahren mit Impfkorpuskeln aus Materiepartikeln.

2. Es wurden bisher nur Prinzipien, aber keine praktikablen, nach einfachen Methoden herstellbare Ausführungsformen für Sender- und/oder Empfängerelemente angegeben. Umfangreiche Untersuchungen haben aber gezeigt, daß gerade hierin die Voraussetzungen für leistungsfähige Durchflußmeßgeräte nach dem Impfverfahren zu suchen sind.

Der Erfindung liegt daher die Aufgabe zugrunde, speziell für das Wärmeimpfverfahren ein in seiner Funktion zuverlässig arbeitendes Sender- bzw. Empfängerelement, ein Verfahren zu seiner Herstellung und auch eine Art seiner Verwendung anzugeben.

Diese Aufgabe ist hinsichtlich des Sender- bzw. Empfängerelements durch die im Anspruch 1 angegebenen Merkmale und hinsichtlich des Herstellungsverfahrens durch die im Anspruch 3 angegebenen Merkmale gelöst.

Gegenüber den Sender- bzw. Empfängerelementen nach dem Stand der Technik hat das vorliegende Sender- bzw. Empfängerelement folgende Vorteile :

Es läßt sich unter Verwendung moderner Technologien einfach, reproduzierbar, preisgünstig und halb- oder vollautomatisch fertigen.

Es ist extrem rückwirkungsarm auf die Strömungs-Dynamik und -Geometrie.

Es verursacht nur sehr kleine Strömungsquerschnittseinschnürungen und damit sehr kleine Wirkdruckverluste.

Es gestattet extrem kleinvolumige Wärmekorpuskeln zu erzeugen und/oder zu detektieren.

Und zudem gestattet es eine Erzeugung und/oder Detektierung dieser Wärmekorpuskeln nur an ausgezeichneten Teilquerschnitten des Strömungsquerschnittes $A_v$, vorzugsweise in der Nähe des Maximums des Strömungsprofils. Ferner sind die vorliegenden Sender- bzw. Empfängerelemente extrem erschütterungsfrei und lassen sich manuell oder mittels halb- oder vollautomatisierbarer Fertigungsverfahren zu dauerhaften, stabilen vollständigen Meßvorrichtungen zusammensetzen.

Sie gestatten außerdem den Anschluß einfacher elektronischer Auswerteeinrichtungen zur Ausgabe analoger und/oder digitaler Meßwerte und arbeiten mit so geringer elektrischer Heizleistung, daß auch bei temperaturempfindlichen Meßmedien (z. B. Nahrungs- und Genußmitteln, Aromaten, Mineralölprodukten) keine Gefahrzustände und/oder bleibende qualitative oder chemische Veränderungen auftreten. Mit den vorliegenden Sender- bzw. Empfängerelementen kann man vorzugsweise im laminaren Strömungsbereich arbeiten und vermag dabei extrem große Durchflußmeßbereiche zu überstreichen. Aber unter Inkaufnahme von systematischen, korrigierbaren Nichtlinearitäten können die Elemente auch im teilweise oder vollständig turbulenten Strömungsbereich betrieben werden.

Zur Herstellung der Sender- bzw. Empfängerelemente lassen sich photolithographische Verfahren einsetzen, wie sie aus der Halbleiterfertigung, speziell aus der Fertigung von Folien-Dehnungsmeßstreifen bekannt sind. Mittels dieser Verfahren werden aus geeigneten Trägerfolien die Sender bzw. Empfängerelemente ausgeätzt.

In der Zeichnung ist die Erfindung in einem Ausführungsbeispiel dargestellt. Es zeigen :

Figur 1 schematisch ein Sender- bzw. Empfängerelement in Ansicht,

Figur 2 schematisch eine nach dem Wärmeimpfverfahren arbeitende Durchfluß-Meßvorrichtung mit einem Sender- und einem Empfängerelement, und

Figur 3 eine Vorrichtung wie Fig. 2 mit einem Senderelement und zwei Empfängerelementen.

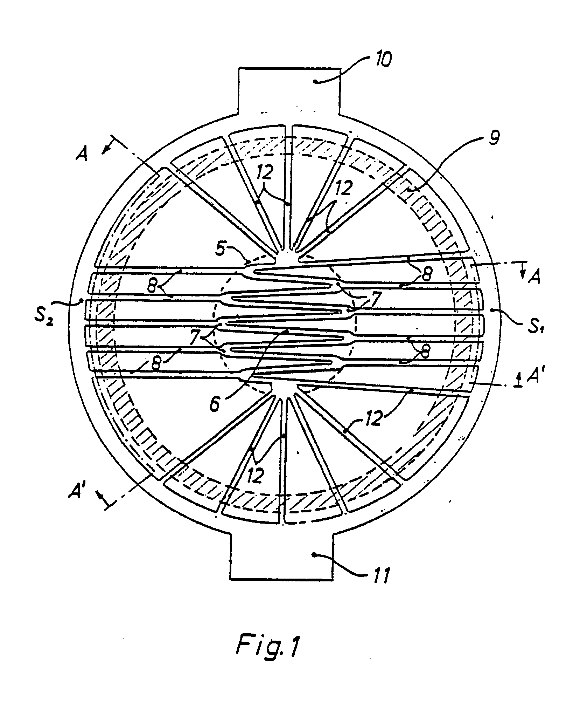

In Fig. 1 ist mit 5 die Heizzone eines Senderelementes bzw. die Empfangszone eines Empfängerelementes bezeichnet. Diese Zone besteht aus einem mäanderförmigen Widerstandsnetzwerk 6 mit kleinem Bedeckungsfaktor.

Von den Umkehrstellen 7 dieses Mäanders gehen — vorzugsweise radial nach außen — jeweils dünne Haltebänder 8 aus, die der Verankerung der Mäanderwindungen in einem geschlossenen, umlaufenden Rahmenband $S_1$, $S_2$ und später in der Aufnahmewandung 9 der Durchfluß-Meßvorrichtung dienen.

Die Elektrodenzuführungen 12 zum Widerstandsnetzwerk 6 erfolgen vorzugsweise von diametralen Stellen 10, 11 der Gesamtkonfiguration in der Weise, daß bei kleinem Bedeckungsfaktor durch Parallelschaltung einer Vielzahl von Zuführungen 12 in zwei getrennten Gruppen ein sehr kleiner elektrischer Zuführungswiderstand entsteht.

Nach einem weiteren Merkmal erfolgt die Gestaltung der Gesamtkonfiguration in der Weise, daß eine örtliche Verteilung der Durchtrittsöffnungen mit minimaler Störung des Strömungsprofiles erfolgt.

Außerdem soll es möglich sein, das Widerstandsnetzwerk 6, die Elektrodenzuführungen 12 und die Haltebänder 8 unter plastischer Deformation um ihre raumfesten Aufhängepunkte aus ihrer ebenen Lage um 90° so zu verdrehen, daß sie mit ihrer Schmalseite zur Strömungsrichtung sehen und dem strömenden Medium einen minimalen Strömungswiderstand entgegensetzen.

Die Wahl der Folienmaterialien hat nach Zweckmäßigkeitsgesichtspunkten im Hinblick und in Anpassung an den jeweils individuellen Anwendungszweck (Meßmedium) zu erfolgen (chemische und physikalische Verträglichkeit).

Für die Senderelemente kommen bevorzugt mechanisch und thermisch hochbelastbare Metallegierungen mit spezifisch hohem Widerstand in Frage, wie z. B. Cr-Ni, Pt, Konstantan etc. Für die Empfängerelemente kommen solche Legierungen in Frage, die einen großen Temperaturbeiwert des elektrischen Widerstandes haben, wie z. B. Ni, Pt, Cu etc.

In dem meisten Fällen wird man jedoch für Sender- und Empfängerelemente mit einheitlichem Folienmaterial auskommen.

Nach einem weiteren Merkmal sind die Metallfolien nicht wie bei dem Ausgangsmaterial für Folien-Dehnungsmeßstreifen durch Aufwalzen in eine möglichst innige, dauerhaft stabile, unlösliche mechanische Verbindung mit der Trägerfolie gebracht, sondern im Gegenteil — z. B. durch Verwendung geeigneter Klebemittel oder niedrigschmelzender Lote — in eine reversible Verbindung, die eine einfache Trennung durch chemische oder physikalische Mittel gestattet.

Alternativ können auch Trägermaterialien Verwendung finden, die sich kurzfristig in chemischen Lösungsmitteln auflösen oder durch physikalische Einwirkungen, wie z. B. Ultraschall, zerlegen lassen.

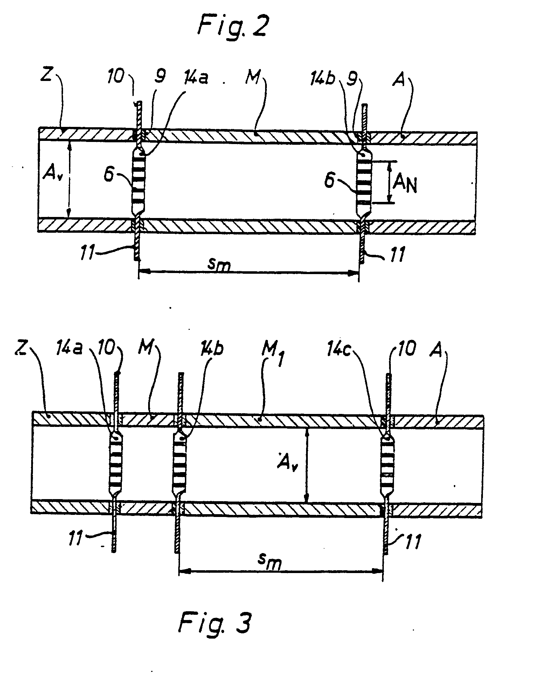

Die Verwendung der im Zusammenhang mit Fig. 1 beschriebenen Sender- bzw. Empfängerelemente in einer Vorrichtung zur Durchflußmessung ist in den Fig. 2 und 3 erläutert. In diesen Figuren ist das Senderelement mit 14a und das Empfängerelement mit 14b bezeichnet.

In der Vorrichtung gemäß Fig. 2 sind ein Senderelement 14a und ein Empfängerelement 14b im gewünschten Abstand mit der Widerstandskonfigurationsseite auf je eine Stirnseite 9 eines Meßgehäusemittenteiles M aus elektrisch nichtleitendem Material (z. B. Keramik, Glas etc.) aufgeklebt oder aufgeschmolzen, das den anwendungsgewünschten Strömungsquerschnitt $A_v$ und den Stirnseitenabstand $s_m$ aufweist.

Nach der derartig erfolgten innigen, unlösbaren Verbindung zwischen dem Meßgehäusemittenteil M und den Sender- bzw. Empfängerelementen 14a, 14b werden in einem weiteren Fertigungsschritt die bis dorthin zur Stützung benötigten Trägerschichten mit den jeweils angemessenen chemischen oder physikalischen Mitteln von den Widerstandsnetzwerken abgelöst und restlos entfernt. In diesem Zustand kann mit einem kammartigen Werkzeug die erwähnte 90°-Drehung des Widerstandsnetzwerkes und/oder der Haltebänder und/oder der Elektrodenzuführungen in die Strömungsrichtung durchgeführt werden.

Anschließend werden dann auf der Zu- und Abgangsseite des Meßgehäusemittenteiles M je ein Anschlußstutzenteil A bzw. Z aus ebenfalls elektrisch nichtleitendem Material aufgeklebt oder aufgeschmolzen, die bevorzugt ebenfalls den anwendungsgerechten Querschnitt $A_v$ aufweisen, um Störungen der homogenen Strömungsgeometrie möglichst hochgradig zu eliminieren.

In gleicher Weise wird bei Vorrichtungen verfahren, die entsprechend Fig. 3 zwei und mehr Empfängerelemente 14b, 14c etc. aufweisen, um höheren Genauigkeitsanforderungen zu genügen. Hier wird zwischen benachbarten Empfängerelementen 14b, 14c einerseits und dem Senderelement 14a andererseits jeweils ein gesondertes Meßgehäusemittenteil $M_1$, $M_2$ ... $M_n$ erforderlich, die nach den beschriebenen Verfahren zu einer gemeinsamen Vorrichtung zusammengefügt werden.

Im Bedarfsfall sind zum Schluß noch die Zuführelektroden 10, 11 aller Elemente durch Herausschneiden der eventuell zur Positionierungsverbesserung vorgesehenen stützenden Rahmenbänder $S_1$, $S_2$ entlang der Linie A-A' in Fig. 1 funktionsfähig zu machen. Über diese Rahmenbänder sind die Haltebänder 8 des Widerstandsnetzwerks 6 in der Ausgangsstruktur ursprünglich elektrisch untereinander und mit den Elektrodenzuführungsbändern 12 verbunden.

Bei größeren Strömungsquerschnitten $A_v$ und dementsprechend höheren Durchflußbereichen kann es sich aus Stabilitätsgründen als notwendig erweisen, die Widerstandsnetzwerke aus dickeren Folien oder gar Blechen herzustellen, z. B. durch Präzisionsstanzen aus Feinblechen.

**Patentansprüche**

1. Sender- bzw. Empfängerelement (14a, 14b, 14c) für eine nach dem Wärmeimpfverfahren arbeitende, in einem Rohr angeordnete Durchfluß-Meßvorrichtung (M, A, Z) mit einer mäanderförmig gewundenen, im Vergleich zum Strömungsquerschnitt ($A_v$) nur einen kleinen Teilquerschnitt ($A_N$) umfassenden Widerstandsstrecke (6), dadurch gekennzeichnet, daß die Widerstandsstrecke (6) in all ihren Umkehrpunkten (7) Haltebänder (8) und an ihren beiden Enden Elektrodenzuführungsbänder (12) besitzt, die jeweils mit der Widerstandsstrecke einstückig sind und aus dem gleichen Material bestehen, und daß die Widerstandsstrecke (6) über diese elektrisch voneinander isolierten Haltebänder (8) und Elektrodenzuführungsbänder (12) direkt mit der die Strömung begrenzende Wandung der Meßvorrichtung (M, A, Z) verankert ist.

2. Sender- bzw. Empfängerelement nach Anspruch 1, dadurch gekennzeichnet, daß die Elektrodenzuführungsbänder (12) zu der Widerstandsstrecke (6) aus Streckenelementen bestehen, die im Vergleich zur Widerstandsstrecke (6) sehr niederohmig sind und vorzugsweise aus mehreren elektrisch parallelgeschalteten Elektroden-Bändern zusammengesetzt sind.

3. Verfahren zur Herstellung eines Sender- bzw. Empfängerelementes nach einem der Ansprüche 1 oder 2, dadurch gekennzeichnet, daß die Widerstandsstrecke (6) mit den Haltebändern (8) und den Elektrodenzuführungsbändern (12) in einer solchen Weise aus einer Ausgangsstruktur, die ein die Widerstandsstrecke (6) und alle Bänder (8, 12) umlaufendes Rahmenband ($S_1$, $S_2$) umfaßt, herausgetrennt wird, daß die freien Enden der Haltebänder (8) elektrisch voneinander isoliert sind und die Elektrodenzuführungsbänder (12) zu zwei Gruppen zusammengefaßt sind, innerhalb derer die einzelnen Bänder (12) einander parallelgeschaltet sind.

4. Durchfluß-Meßvorrichtung unter Verwendung von Sender- bzw. Empfängerelementen nach einem der Ansprüche 1 oder 2, dadurch gekennzeichnet, daß die mäanderförmige Widerstandsstrecke (6) der Sender- bzw. Empfängerelemente (14a, 14b, 14c), deren Elektrodenzuführungsbänder (12) und deren Haltebänder (8) durch Umbiegen in eine zur Strömungsrichtung des Mediums parallele Lage gebracht sind.

**Claims**

1. Transmitter or receiver element (14a, 14b, 14c) for a throughflow measuring device (M, A, Z), which operates by the thermal inoculation method and is arranged in a pipe, with a resistance path (6), which is wound in meander shape and encompasses only a small partial cross-section ($A_N$) by comparison with the flow cross-section ($A_v$), characterised thereby, that the resistance path (6) in all its reversal points (7) possesses retaining tapes (8) and at both its ends possesses electrode feed tapes (12), which are each integral with the resistance path and consist of the same material, and that the resistance path (6) is anchored by way of these retaining tapes (8) and electrode feed tapes (12), which are all electrically insulated one from the other, directly at the wall of the measuring device (M, A, Z), which bounds the flow.

2. Transmitter or receiver element according to claim 1, characterised thereby, that the electrode feed tapes (12) to the resistance path (6) consist of path elements which are of very low resistance by comparison with the resistance path (6) and preferably composed of several electrode tapes electrically connected in parallel.

3. Method for the manufacture of a transmitter or receiver element according to one of the claims 1 or 2, characterised thereby, that the resistance path (6) with the retaining tapes (8) and the electrode feed tapes (12) is severed out from an initial structure, which comprises a frame tape ($S_1$, $S_2$) encircling the resistance path (6) and all tapes (8, 12), in such a manner that the free ends of the retaining tapes (8) are electrically insulated one from the other and the electrode feed tapes (12) are combined in two groups, within which the individual tapes (12) are one connected in parallel to the other.

4. Throughflow measuring device with the use of transmitter or receiver elements according to one of the claims 1 or 2, characterised thereby, that the meander-shaped resistance path (6) of the transmitter or receiver elements (14a, 14b, 14c), its electrode feed tapes (12) and its retaining tapes (8) are brought through bending-over into a position parallel to the flow direction of the medium.

**Revendications**

1. Elément émetteur ou récepteur (14a, 14b, 14c) pour un débitmètre (M, A, Z) à traceurs thermiques disposé dans un tube et possédant une zone résistante (6) formée de méandres n'occupant qu'une petite partie de la section de passage totale ($A_n$), caractérisé en ce que la zone résistante (6) possède des bandes de support (8) en tous ses points de rebroussement, et des bandes d'alimentation (12) à ses deux extrémités, lesdites bandes formant toutes une seule pièce avec la zone résistante et étant constituées par le même matériau qu'elle, et en ce que la zone résistante (6) est accrochée directement à la paroi délimitant le passage du débitmètre (M, A, Z) par l'intermédiaire desdites bandes de support (8) et d'alimentation (12) isolées électriquement les unes des autres.

2. Elément émetteur ou récepteur selon la revendication 1, caractérisé en ce que les bandes d'alimentation (12) de la zone résistante (6) sont constituées par des éléments de circuit qui ont une très faible résistance ohmique comparativement à l'élément de circuit résistant (6) et sont formées de préférence de multiples bandes électrodes couplées électriquement en parallèle.

3. Procédé pour la fabrication d'un élément émetteur ou récepteur selon l'une des revendications 1 ou 2, caractérisé en ce que la zone résistante (6) ainsi que les bandes de support (8) et les bandes d'alimentation (12) sont détachées d'une structure finale englobant dans une bande d'encadrement périphérique ($S_1$, $S_2$) une zone résistante (6) et toutes les bandes (8, 12), de telle manière que les extrémités libres des bandes de support (8) soient isolées électriquement les unes des autres et que les bandes d'alimentation (12) soient réunies en deux groupes à l'intérieur de chacun desquels toutes les bandes (12) individuelles sont raccordées électriquement en parallèle.

4. Débitmètre utilisant des éléments émetteurs ou récepteurs selon l'une quelconque des revendications 1 ou 2, caractérisé en ce que la zone résistante (6) en forme de méandres des éléments émetteurs ou récepteurs (14a, 14b, 14c) ainsi que ses bandes d'alimentation (12) et ses bandes de support (8) sont amenées par torsion dans une position parallèle à la direction de circulation du fluide.

Fig. 1

## Fig. 2

## Fig. 3